# EUROPÄISCHE PATENTSCHRIFT

(11) **EP 0 474 799 B1**
(45) Veröffentlichungstag und Bekanntmachung des Hinweises auf die Patenterteilung: **19.10.1994**
(21) Anmeldenummer: 91903075.9
(22) Anmeldetag: 18.01.1991
(51) Int. Cl.: G01B 11/27

(54) **VERFAHREN UND ANORDNUNG ZUM PRÜFEN DER AUSRICHTUNG VON KÖRPERACHSEN AUF PARALLELITÄT**
PROCESS AND ARRANGEMENT FOR VERIFYING THE PARALLELISM OF AXES OF BODIES
PROCEDE ET DISPOSITIF PERMETTANT DE CONTROLER LE PARALLELISME D'AXES DE CORPS

(30) Priorität: 21.03.1990 DE 4009146
(43) Veröffentlichungstag der Anmeldung: 18.03.1992
(73) Patentinhaber: PRÜFTECHNIK DIETER BUSCH AG, 85737 Ismaning (DE)
(72) Erfinder: LYSEN, Heinrich, D-8000 München 40 (DE)
(74) Vertreter: Hieke, Kurt
(86) Internationale Anmeldenummer: EP9100082
(87) Internationale Veröffentlichungsnummer: WO9114922

(56) Entgegenhaltungen:
- EP-A- 0 250 768
- DE-A- 3 320 163
- GB-A- 2 128 324
- US-A- 4 209 254

## Beschreibung

Die Erfindung bezieht sich auf ein Verfahren zu dem im Oberbegriff des Patentanspruchs 1 angegebenen Zweck und auf eine Anordnung zum Durchführen dieses Verfahrens.

Zum Feststellen des Fluchtungszustandes zweier hintereinander fluchtend anzuordnender Wellen ist es bekannt, auf beiden Wellen Lichtsender, die einen gebündelten Lichtstrahl im wesentlichen parallel zur jeweiligen Wellenachse aussenden, anzuordnen und auf der jeweils anderen Welle Lichtstrahlempfänger mit zueinander senkrechten Detektorachsen zum Empfangen des Lichtstrahls und zum Feststellen der Position des Lichtstrahlauftreffpunktes bezüglich eines wellenfesten Koordinatensystems zu befestigen (GB-A- 2 128 324). Aus der Lage der Lichtstrahlauftreffpunkte auf den Detektorachsen der Lichtstrahlempfänger wird eine elektronische Anzeige erzeugt, die Aufschluß über die Ablage der gegenseitigen Wellenausrichtung vom idealen Fluchtungszustand gibt. Die bekannte Anordnung eignet sich nicht zum Prüfen und/oder Einrichten einer gegenseitigen parallelen Ausrichtung der Achsen von nebeneinander befindlichen Körpern oder Teilen von Körpern.

In der Technik stellt sich häufig jedoch die Aufgabe, genau festzustellen, in welchem Ausmaß bestimmte, nachstehend als Körperachsen bezeichnete Achsen nebeneinander befindlicher Körper oder Teile von Körpern, die zueinander im Idealfalle parallel ausgerichtet sein sollten, von dem Idealzustand der Parallelität abweichen, wobei man vor der Prüfung nur weiß, daß die Achsen wenigstens ungefähr zueinander parallel ausgerichtet sind. Beispiele für solche Aufgabenstellungen sind die Parallelitätskontrolle zusammenarbeitender, nebeneinander ggf. auch in einem größeren Abstand angeordneter Walzen oder die Parallelitätskontrolle von ebenen Flächenbereichen an einem Körper unter Ausnutzung der Gegebenheit, daß eine über einem bestimmten Punkt von diesen Flächen errichtete Senkrechte hierzu zu den über beliebigen anderen Punkten von diesen errichteten Senkrechten parallel ist und somit als Charakteristikum für die Lage der jeweiligen ebenen Fläche im Raum herangezogen werden kann. Die Kenntnis von der ungefähren Parallelität der Körperachsen zu Beginn der genauen Vermessung hat man beispielsweise aufgrund einer groben Vorausrichtung der Walzen oder einer vorherigen Vor-Einrichtung, etwa einer Vor-Bearbeitung, der Körperflächen.

Der Erfindung liegt die Aufgabe zugrunde, ein Verfahren gemäß dem Oberbegriff des Patentanspruchs 1 zu schaffen, das mit einem geringen Aufwand an apparativen Hilfsmitteln auf einfache Weise durchgeführt werden kann und dennoch hochgenaue Meßergebnisse liefert.

Die vorstehende Aufgabe wird durch die im Patentanspruch 1 genannten Verfahrensschritte gelöst.

Unter Anwendung des erfindungsgemäßen Verfahrens ist es auf einfache Weise möglich, genau festzustellen, ob die gegenseitige Ausrichtung der Körperachsen innerhalb einer tolerierbaren Abweichung vom Idealzustand der Parallelität liegt bzw. welche Korrekturen vorgenommen werden müssen, um die gegenseitige Ausrichtung in den zulässigen Toleranzbereich zu verbessern.

Die abhängigen Ansprüche 2 bis 9 betreffen bevorzugte Ausführungsarten des Verfahrens gemäß Patentanspruch 1.

Der Patentanspruch 10 hat eine zum Durchführen des erfindungsgemäßen Verfahrens geeignete Anordnung zum Gegenstand, und die abhängigen Ansprüche 11 bis 15 betreffen bevorzugte Ausführungsformen der Anordnung nach Anspruch 10.

Die Erfindung wird nachstehend anhand des Ausführungsbeipiels einer Parallelitätsvermessung der Mittelachsen zweier nebeneinander angeordneter Walzen noch näher erläutert.

In der Zeichnung zeigt jeweils in schematischer Darstellung:
- Fig. 1: perspektivisch die beiden Walzen mit endseitig um sie herum in einer gemeinsamen, zu ihren Mittelachsen etwa senkrechten Meßebene angeordneten Detektoren sowie einem von einer von ihnen aus etwa senkrecht zur jeweiligen Mittelachse ausgesandten Laserstrahl,
- Fig. 2: die Draufsicht auf die Anordnung nach Fig. 1,
- Fig. 3: die Anordnung gemäß Fig. 1 von vorn gesehen mit Blickrichtung parallel zu den Mittelachsen der Walzen,
- Fig. 4: eine Abwandlung der Anordnung gemäß Fig. 1 bis 3,
- Fig. 5: eine perspektivische Darstellung einer Einzelwalze mit einem von ihr aus ausgesendeten Laserstrahl unter Angabe von für das erfindungsgemäße Verfahren maßgeblichen Meßgrößen, die sich z.T. aus einer Parallelitätsabweichung relativ zu einer Bezugsachse ergeben, und
- Fig. 6 bis 10: verschiedene Ausführungsformen einer Vorrichtung zum Aussenden des Laserstrahls von den zu überprüprüfenden Wellen.

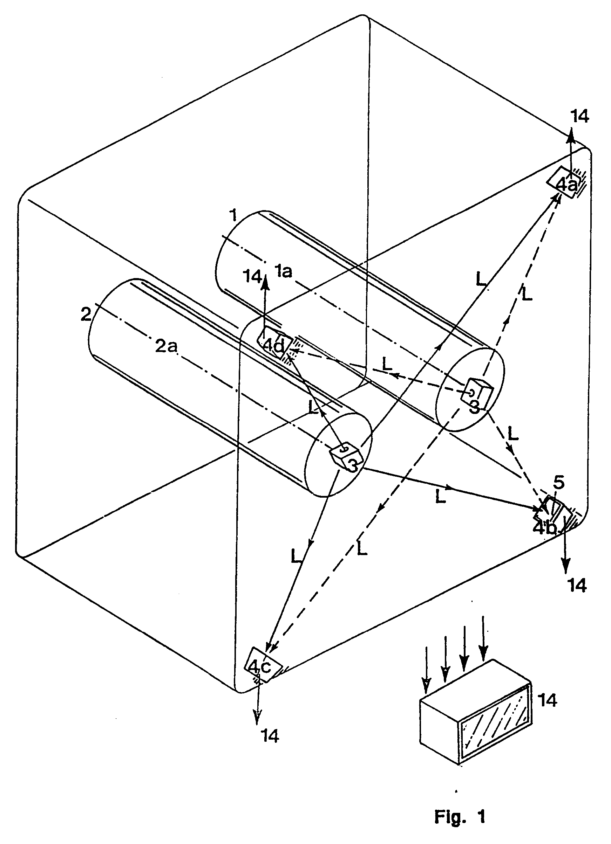

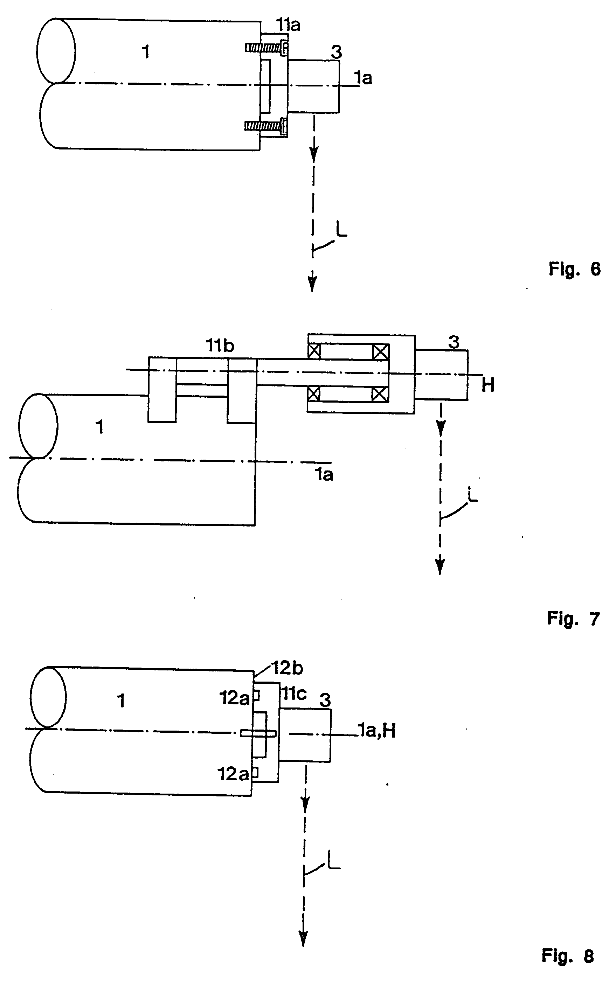

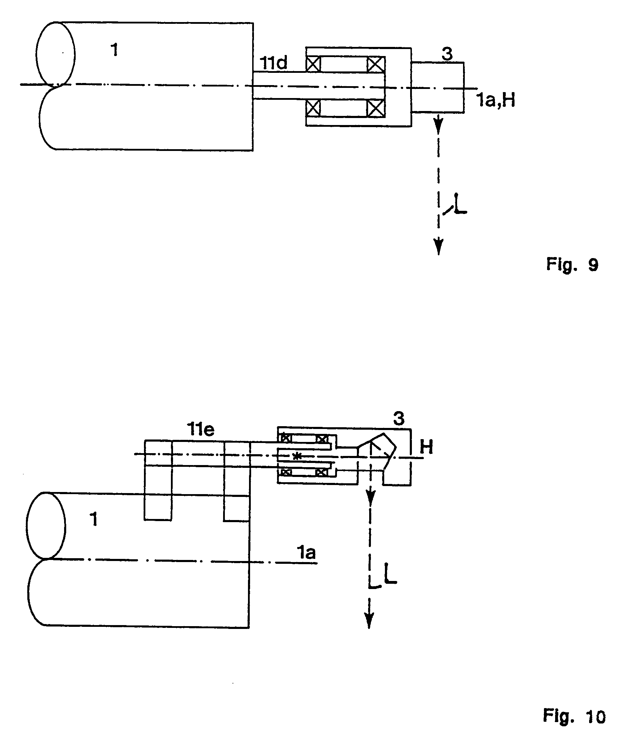

Die Fig. 1 zeigt zwei nebeneinander befindliche Walzen 1 und 2, deren Mittelachsen 1a, 2a wenigstens ungefähr zueinander parallel sind und deren gegenseitige Lage auf Parallelität bzw. hinsichtlich des genauen Ausmaßes einer Abweichung von dem Idealzustand einer gewünschten parallelen Ausrichtung geprüft werden soll. Für diese Überprüfung ist mittels einer geeigneten Anschlußvorrichtung, beispielsweise einer der in den Fig. 6 - 10 dargestellten Anschlußvorrichtungen 11a - 11e, an jeder Walze 1, 2 lösbar ein Laserstrahlsender 3 so befestigbar, daß er den von ihm in Form eines Parallellichtbündels von sehr kleinem Durchmesser erzeugten Laserstrahl L etwa senkrecht zur Mittelachse 1a bzw. 2a der jeweiligen Walze 1 bzw. 2 ausgesendet.

Des weiteren sind für die Relativlageprüfung der Mittelachsen 1a, 2a um die Walzen 1, 2 herum im gegenseitigen Abstand vier einachsige Positionsdetektoren 4a, 4b, 4c, 4d so angeordnet, daß sich ihre jeweilige Meßachse 5 etwa parallel zu den Mittelachsen 1a, 2a erstreckt und jede der Flächen durchquert, die der Laserstrahl L bei der nacheinander stattfindenden Drehung des Strahlsenders 3 um die Mittelachse 1a und um die Mittelachse 2a aufspannt. Diese Drehung kann dadurch bewerkstelligt werden, daß entweder die Walzen 1 und 2 mit dem z.B. mittels der Anschlußvorrichtung 11a gemäß Fig. 6 jeweils an ihnen starr befestigten Strahlsender 3 gedreht werden oder der Strahlsender 3 bei jeweils stehenbleibender Walze 1, 2 mittels einer hierfür besonders eingerichteten Anschlußvorrichtung, beispielsweise einer der Anschlußvorrichtungen 11b - 11e gemäß Fig. 7 bis 10, gedreht wird.

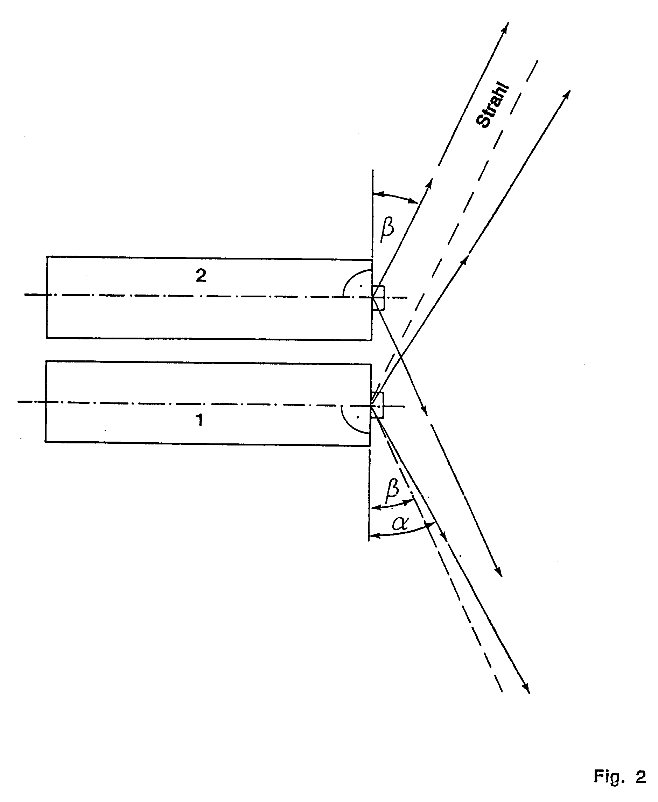

Wie in Fig. 2 übertrieben dargestellt, kommt es nicht darauf an, daß der Laserstrahl L genau senkrecht zu der jeweiligen Mittelachse 1a bzw. 2a ausgesendet wird , und prinzipiell auch nicht darauf, daß die Aussendewinkel α bzw. β bei den einzelnen Walzen 1, 2 untereinander gleich sind. Ob dies im Einzelfalle nötig ist, hängt von der Anzahl und der gegenseitigen Anordnung der Detektoren ab. Wichtig ist lediglich, daß der Laserstrahl L von jeder Walze 1, 2 aus bei der Drehung auf die Meßachse 5 eines jeden Detektors auftrifft. Weiterhin ist es zweckmäßig, daß der Laserstrahl wenigstens ungefähr senkrecht zur Körperachse 1a bzw. 2a ausgesendet wird.

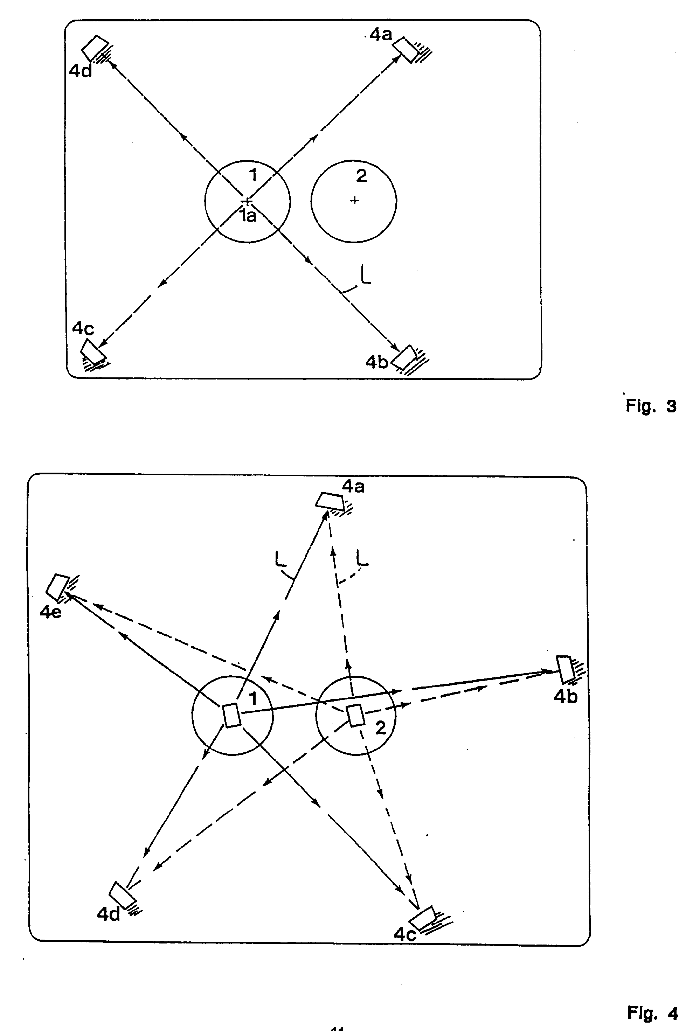

In dem aus Fig. 1 und Fig. 3 ersichtlichen speziellen Fall der Verwendung von vier Detektoren ist es nötig, wie in Fig. 2 bei der oberen Walze mit gestrichelten Linien angegeben, dafür zu sorgen, daß der Laserstrahl L von jeder der beiden Walzen 1 und 2 aus unter dem gleichen Winkel α ausgesendet wird, oder daß, wie in Fig.3 angedeutet, die Detektoren 4a - 4d ungefähr im gleichen radialen Abstand um die weiter unten noch näher erläuterte Bezugsachse herum angeordnet werden, die in Fig.3 als mit der Mittelachse 1a der Walze 1 zusammenfallend angenommen ist. Bei Verwendung von fünf Detektoren 4a - 4e gemäß Fig. 4 kann demgegenüber der Strahlaussendewinkel α bzw. β von Walze zu Walze ebenso verschieden sein wie der radiale Detektorabstand. In Fig. 2 ist dies mit dem Winkel α für die untere Walze 1 und mit dem Winkel β für die obere Walze 2 dargestellt und in Fig.4 hinsichtlich des Abstandes wiedergegeben.

Zum Prüfen der gegenseitigen Ausrichtung der beiden Mittelachsen 1a und 2a wird der Strahlsender 3 zunächst an der einen der beiden Walzen 1, 2 angebracht und um die jeweilige Mittelachse 1a bzw. 2a über einen solchen Winkelbereich gedreht, daß der Laserstrahl L nacheinander auf jeden der Detektoren 4a - 4d auftrifft. Die Detektoren liefern dabei jeweils ein Signal, das die Lage des Auftreffpunktes des Laserstrahls L entlang der Detektorachse 5 angibt.

Die Signale werden zur späteren rechnerischen Verwertung gespeichert.

Im Anschluß daran wird der gleiche Vorgang mit zu der anderen Walze umgesetztem Strahlsender wiederholt.

Aus den so gewonnenen Detektorsignalen und der ggf. gesondert ermittelten relativen Lage von Durchstoßpunkten der Walzen-Mittelachsen 1a, 2a und der Detektorachsen 5 durch eine der beiden vom Laserstrahl L bei den beiden vorstehend geschilderten Meßvorgängen aufgespannten Flächen wird dann -vorzugsweise mittels eines programmgesteuerten Rechners 14- zu jeder Mittelachse 1a, 2a deren relative räumliche Lage bezüglich einer vorbestimmten, infolge einer vorhergehenden Grobausrichtung zu ihr wenigstens ungefähr parallelen Bezugsachse errechnet, die durch einen Meßvorgang der vorstehend beschriebenen Art in die Erfassung mit einbezogen worden ist. In Fällen, in denen es nur auf die Lage zweier Körperachsen relativ zueinander, im Beispiel die relative Lage der Mittelachsen 1a, 2a, ankommt, kann eine dieser Mittelachsen als Bezugsachse herangezogen werden; ansonsten kann, wenn zusätzlich auch eine bestimmte Ausrichtung im Raume verlangt wird, eine gesonderte Bezugsachse eingesetzt werden.

Das Errechnen der räumlichen oder gegenseitigen Lage der Körperachsen 1a, 2a kann auf der Grundlage der mittels des Meßvorganges gewonnenen Detekorsignale und weiterer benötigter Meßdaten in Form der nur einmal zu ermittelnden relativen Lage von Durchstoßpunkten der oben genannten Art nach bekannten Rechenmethoden durchgeführt werden.Diese umfassen z.B. das Aufstellen und Lösen eines linearen Gleichungssystems mit einer der Anzahl der unbekannten gesuchten Größen entsprechenden Anzahl von Gleichungen sowie ggf. das Ermitteln und Ausgleichen von Meßfehlern nach der Methode der kleinsten Fehlerquadrate.

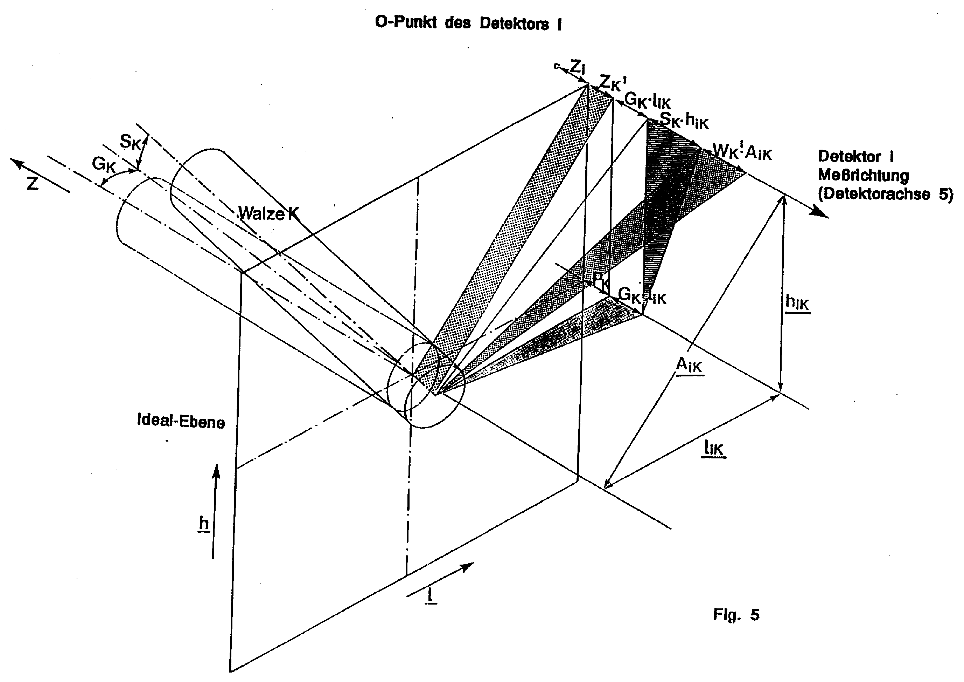

Die Fig. 5 gibt in Verbindung mit einer der Walzen die Meßgrößen wieder, die an den einzelnen Detektoren anfallen bzw. zusätzlich noch gesondert zu ermitteln sind. Die gesondert zu ermittelnden, beispielsweise mit einem Maßband oder dgl. auszumessenden Meßgrößen sind in Fig. 5 unterstrichen. Als Bezugsachse ist in Fig. 5 eine Achse Z angenommen, für die mit einem Meßvorgang der vorbeschriebenen Art Grundwerte auf den Meßdetektoren festgestellt worden sind. Gegenüber dieser Bezugsachse Z weist die Mittel- bzw. Körperachse K einen Winkelversatz auf, der die in Fig. 5 mit einem Index k bezeichneten Meßgrößen entlang der Detektorachse 5 des jeweils gerade vom Meßstrahl L getroffenen Detektors i ergibt. Zᵢ ist der Abstand des Detektornullpunkts von der Ideal-Ebene, Z_{K}, bzw. P_{K} ist der Versatz des Laserstrahls L in Z-Richtung gegenüber der Ideal-Ebene und W_{K′}. AᵢK ist der Winkelversatz des Laserstrahls L gegenüber der zur Mittelachse der Walze K senkrechten Projektionsrichtung.

## Patentansprüche

1. Verfahren zum Prüfen der Ausrichtung von zueinander parallelen oder ungefähr parallelen Achsen nebeneinander befindlicher Körper (1,2) oder Teile von Körpern, wie z.B. Körperachsen, auf den Grad der Übereinstimmung mit bzw. der Abweichung von der Parallelität, dadurch gekennzeichnet, daß
a) Von jedem Körper (1,2) bzw. Körperteil aus ein parallel gebündelter Meßstrahl (L) einer elektromagnetischen Strahlung, insbesondere ein Laserstrahl (L), radial oder ungefähr radial bezüglich der jeweiligen Körperachse (1a,2a) ausgesendet und um diese gedreht wird,
b) mindestens drei Detektoren (4a,4b,4c,4d,4e), die beim Auftreffen eines Meßstrahls (L) auf eine Detektorachse (5) jeweils ein Signal liefern, das die Lage des Meßstrahlauftreffpunktes entlang dieser Detektorachse (5) angibt, vor dem Verfahrensschritt a) im Abstand von jeder Körperachse (1a,2a) und im gegenseitigen Abstand um diese herum raumfest so angeordnet werden, daß sich ihre jeweilige Detektorachse (5) etwa parallel zu den Körperachsen (1a,2a) durch alle Flächen hindurch erstreckt, die beim Drehen der von den Körpern (1,2) oder Körperteilen aus jeweils ausgesendeten Meßstrahlen (L) von diesen aufgespannt werden, und
c) aus den Detektorsignalen und der ggf. gesondert ermittelten relativen Lage von Durchstoßpunkten der Körperachsen (1a,2a) und der Detektorachsen (5) durch eine der von einem Meßstrahl (L) aufgespannten Flächen, zu jeder Körperachse (1a,2a) deren relative räumliche Lage bezüglich einer vorbestimmten, zu ihr parallelen oder ungefähr parallelen, in die Erfassung gemäß a) und b) einbezogenen Bezugsachse, ggf. einer unter den Körperachsen ausgewählten Körperachse (1a oder 2a), errechnet wird.

2. Verfahren nach Anspruch 1, **dadurch gekennzeichnet**, daß drei Detektoren verwendet und die Meßstrahlen (L) alle möglichst genau in einer zur jeweiligen Körperachse (1a,2a) senkrechten Ebene ausgesendet werden.

3. Verfahren nach Anspruch 1, **dadurch gekennzeichnet,** daß vier Detektoren (4a-4d) verwendet und die Meßstrahlen (L) von den einzelnen Körpern (1,2) bzw. Körperteilen aus jeweils möglichst genau unter gleichem Winkel bezüglich der betreffenden Körperachse (1a,2a) ausgesendet werden.

4. Verfahren nach Anspruch 1, **dadurch gekennzeichnet**, daß vier Detektoren (4a-4d) verwendet und bei von Körperachse zu Körperachse unterschiedlichen Meßstrahlaussendewinkeln so angeordnet werden, daß sie von der Bezugsachse (1a) ungefähr gleichen Abstand haben.

5. Verfahren nach Anspruch 1, **dadurch gekennzeichnet**, daß fünf Detektoren (4a-4e) verwendet werden.

6. Verfahren nach einem der vorhergehenden Ansprüche, **dadurch gekennzeichnet**, daß bei mindestens einem Körper (1,2) oder Körperteil der Meßstrahl (L) körperfest eingerichtet und der Körper bzw. Körperteil gedreht wird**.**

7. Verfahren gemäß einem der Ansprüche 1 bis 5, **dadurch gekennzeichnet**, daß mindestens ein Körper (1) oder Körperteil bei der Prüfung feststeht und der zugehörige Meßstrahl L um eine Hilfsachse H einer an den Körper (1,2) oder Körperteil ansetzbaren Anschlußvorrichtung (11a,11b,11c,11d) gedreht wird, die bezüglich der Körperachse (1a) in eine bekannte, für jeden feststehenden Körper (1) oder Körperteil gleiche räumliche Bezugslage eingestellt wird.

8. Anwendung des Verfahrens gemäß einem der vorhergehenden Ansprüche für die Prüfung der Drehachsen nebeneinander befindlicher Wellen oder Walzen auf Parallelität.

9. Anwendung des Verfahrens gemäß einem der Ansprüche 1 bis 7 für die Prüfung nebeneinander befindlicher ebener Körperflächen auf Parallelität, wobei zu den Körperflächen senkrechte Achsen als Körperachsen herangezogen werden.

10. Anordnung zum Prüfen der Ausrichtung von zueinander parallelen oder ungefähr parallelen Achsen nebeneinander befindlicher Körper oder Teile von Körpern, wie z.B. Körperachsen, auf den Grad der Übereinstimmung mit bzw. Abweichung von der Parallelität, **gekennzeichnet durch**
a) einen Meßstrahlsender (3) zum Aussenden eines im wesentlichen parallel gebündelten Meßstrahls (L) einer elektromagnetischen Strahlung, insbesondere eines Laserstrahls, welcher Meßstrahlsender (3) mittels einer an ihm befestigten Anschlußvorrichtung (10,11a,11b,11c,11d) an dem jeweiligen Körper (1) oder Körperteil in solcher Weise anbringbar ist, daß er den Meßstrahl (L) radial oder ungefähr radial zu der zu vermessenden Körperachse oder einer dazu parallelen Achse bezüglich des jeweiligen Körpers (1) oder Körperteils aussendet, wobei er um die Körperachse oder eine zu dieser parallele Achse zusammen mit dem Körper (1) oder Körperteil oder diesem gegenüber drehbar ist,
b) mindestens drei einzeln raumfest aufstellbare, jeweils eine Detektorachse (5) aufweisende optoelektronische Detektoren (4a-4e), die elektrische Signale liefern, die die Lage des Auftreffpunktes eines Lichtstrahls auf die Detektorachse (5) dieser entlang angeben, und
c) die Anordnung der Detektoren (4a-4e) im seitlichen Abstand von der Richtung der zu vermessenden Körperachse um diese herum in solcher Weise, daß sich ihre Detektorachsen (5) in einem gegenseitigen Abstand parallel oder ungefähr parallel zu der zu vermessenden Körperachse erstrecken und der Meßstrahl (L) bei seiner Drehung über einen vorbestimmten Winkelbereich die Meßachsen (5) aller Detektoren (4a-4e) kreuzt.

11. Anordnung nach Anspruch 10, **dadurch gekennzeichnet**, daß die Anschlußvorrichtung (11a) starr an dem jeweiligen Körper (1) oder Körperteil befestigbar ist.

12. Anordnung nach Anspruch 11, **dadurch gekennzeichnet**, daß der Meßstrahlsender (3) starr mit der Anschlußvorrichtung verbunden ist.

13. Anordnung nach Anspruch 11, **dadurch gekennzeichnet**, daß der Meßstrahlsender (3) an der Anschlußvorrichtung (11b,11d,11e) um eine Achse H von dieser drehbar ist, die im am Körper (1) oder Körperteil befestigten Zustand der Anschlußvorrichtung zu der Körperachse (1a) etwa parallel ist oder mit dieser zusammenfällt.

14. Anordnung nach Anspruch 10, **dadurch gekennzeichnet**, daß die Anschlußvorrichtung (11c) um die Körperachse (1a) drehbar an den jeweiligen Körper (1) oder Körperteil ansetzbar ist und der Meßstrahlsender (3) starr an ihr angebracht ist.

15. Anordnung nach Anspruch 14, **dadurch gekennzeichnet**, daß die Anschlußvorrichtung (11c) eine ebene Ansetzfläche (12a) zum Ansetzen an eine zur Körperachse senkrechte ebene Körperfläche (12b) aufweist und der Meßstrahlsender (3) mit zur Ansetzfläche (12a) etwa paralleler Meβstrahlaussenderichtung starr an der Anschlußvorrichtung (11c) befestigt ist.

## Claims

1. Method for testing the alignment of mutually parallel or approximately parallel axes of bodies (1, 2) or parts of bodies situated one beside the other, such as for example body axes, for the degree of agreement with or deviation from parallelism, characterised thereby, that
a) a parallelly focussed measurement beam (L) of an electromagnetic radiation, in particular a laser beam (L), is emitted from each body (1, 2) or body part radially or approximately radially with reference to the respective body axis (1a, 2a) and rotated about this,
b) at least three detectors (4a, 4b, 4c, 4d, 4e), which on the incidence of a measurement beam (L) on a detector axis (5) each time deliver a signal which indicates the position of the point of incidence of the measurement beam along this detector axis (5), are so arranged fixed in space at a distance from each body axis (1a, 2a) and at a mutual spacing around this before the method step (a) that their respective detector axis (5) extends about parallelly to the body axes (1a, 2a) through all surfaces which are spanned by the measurement beams (L), which are respectively emitted from the bodies (1, 2) or body parts, during their rotation and,
c) for each body axis (1a, 2a), its relative spatial postion with reference to a predetermined reference axis, which is parallel or approximately parallel to it and included in the detection according to (a) and (b) and which in a given case is one body axis (1a, 2a) selected from the body axes, is computed from the detector signals and the relative position, which is in a given case ascertained separately, of points of intersection of the body axes (1a, 2a) and the detector axes (5) through one of the surfaces spanned by a measurement beam (1).

2. Method according to claim 1, characterised thereby, that three detectors are used and the measurement beams (L) are all emitted as accurately as possible in a plane which is perpendicular to the respective body axis (1a, 2a).

3. Method according to claim 1, characterised thereby, that four detectors (4a to 4d) are used and the measurement beams (L) are each emitted from the individual bodies (1, 2) or body parts as accurately as possible at the same angle with reference to the body axis (1a, 2a) concerned.

4. Method according to claim 1, characterised thereby, that four detectors (4a to 4d) are used and so arranged when the measurement beam emission angles differ from body to body axis that they have approximately the same distance from the reference axis (1a).

5. Method according to claim 1, characterised thereby, that five detectors (4a to 4e) are used.

6. method according to one of the preceding claims, characterised thereby, that for at least one body (1, 2) or body part, the measurement beam (L) is arranged to be fixed physically and the body or body part is rotated.

7. Method according to one of the claims 1 to 5, characterised thereby, that at least one body (1) or body part is stationary during the testing and the associated measurement beam (L) is rotated about an auxiliary axis (H) of an attachment device (11a, 11b, 11c, 11d), which is mountable on the body (1, 2) or body part and which is set into a known spatial reference position, which is the same for each stationary body (1) or body part, with reference to the body axis (1a).

8. Application of the method according to one of the preceding claims, for the testing of the rotational axes of shafts or rollers, which are disposed one beside the other, in respect of parallelism.

9. Application of the method according to one of the claims 1 to 7 for the testing of planar body surfaces, which are disposed one beside the other, in respect of parallelism, wherein axes, which are perpendicular to the body surfaces, are drawn upon as body axes.

10. Arrangement for testing the alignment of mutually parallel or approximately parallel axes of bodies or parts of bodies situated one beside the other, such as for example body axes, for the degree of agreement with or deviation from the parallelism, characterised by
a) a measurement beam transmitter (3) for the emission of a substantially parallelly focussed measurement beam (L) of an electromagnetic radiation, in particular a laser beam, which measurement beam transmitter (3) is mountable by means of an attachment device (10, 11a, 11b, 11c, 11d), which is fastened thereat, at the respective body (1) or body part in such a manner that it emits the measurement beam (L) radially or approximate radially to the body axis to be measured or an axis parallel thereto with reference to the respective body (1) or body part, wherein it is rotatable about the body axis or an axis parallel thereto together with the body (1) or body part or relatively thereto,
b) at least three individual opti-electronic detectors (4a to 4e), which can be set up to be spatially fixed, each display a respective detector axis (5) and which supply electrical signals which indicate the position of the point of incidence of a light beam on the detector axis (5) along this, and
c) the arrangement of the detectors (4a to 4e) at a lateral spacing from the direction of the body axis, which is to be measured, and around this in such a manner that their detector axes (5) extend at a mutual spacing parallelly or approximately parallelly to the body axis, which is to be measured, and the measurement beams (L) crosses the measurement axes (5) of all detectors (4a to 4e) during its rotation through a predetermined angular region.

11. Arrangement according to claim 10, characterised thereby, that the attachment device (11a) is rigidly fastenable at the respective body (1) or body part.

12. Arrangement according to claim 11, characterised thereby, that the measurement beam transmitter (3) is rigidly connected with the attachment device.

13. Arrangement according to claim 10, characterised thereby, that the measurement transmitter (3) is rotatable at the attachment device (11b, 11d, 11e) by this about an axis (H), which in the state, in which the attachment device is fastened at the body (1) or body part, is about parallel to the body axis (1a) or co-incides therewith.

14. Arrangement according to claim 10, characterised thereby, that the attachment device (11c) is mountable at the respective body (1) or body part to be rotatable about the body axis (1a) and the measurement beam transmitter (3) is rigidly mounted thereat.

15. Arrangement according to claim 14, characterised thereby, that the attachment device (11c) displays a planar attachment surface (12a) for attaching at a planar body surface (12b), which is perpendicular to the body axis and the measurement beam transmitter (3) is rigidly fastened at the attachment device (11c) with the direction of emission of the measurement beam about parallel to the attachment surface (12a).

## Revendications

1. Procédé pour contrôler l'alignement d'axes parallèles ou approximativement parallèles entre eux, de corps (1,2) ou de parties de corps disposés côte-à-côte, comme par exemple des axes de corps, sur la base du degré de parallélisme exact ou de l'écart par rapport au parallélisme, caractérisé par le fait que
a) un faisceau de mesure focalisé parallèle (L) d'un rayonnement électromagnétique, notamment un faisceau laser (L), est émis par chaque corps (1,2) ou partie de corps, radialement ou approximativement radialement par rapport à l'axe respectif (1a,2a) du corps et est pivoté autour de cet axe,
b) au moins trois détecteurs (4a,4b,4c,4d,4e), qui, lorsqu'un faisceau de mesure (L) rencontre un axe (5) d'un détecteur, délivrent respectivement un signal qui indique la position du point d'impact du faisceau de mesure le long de cet axe (5) du détecteur, sont disposés d'une manière fixe dans l'espace, avant l'étape opératoire a), à distance de chaque axe (1a,2a) du corps et à une distance réciproque autour de cet axe, de sorte que les axes respectifs (5) du détecteur s'étendent approximativement parallèlement aux axes (1a,2a) du corps en traversant par toutes les surfaces qui, lors de la rotation des faisceaux de mesure (L) émis respectivement à partir des corps (1,3) ou des parties de corps, sont balayées par ces faisceaux, et
c) à partir des signaux des détecteurs et de la position relative, éventuellement déterminée de façon particulière, de points où les axes (1a,2a) des corps et des axes (5) des détecteurs, traversent l'une des surfaces balayées par un faisceau de mesure (L), on calcule la position spatiale relative de cet axe par rapport à un axe de référence prédéterminé, qui est parallèle ou approximativement parallèle à cet axe et qui est inclus dans la détection conformément à a) et b), et éventuellement par un axe (1a ou 2a) du corps, sélectionné parmi les axes du corps.

2. Procédé suivant la revendication 1, caractérisé par le fait qu'on utilise trois détecteurs et que les faisceaux de mesure (L) sont tous émis aussi précisément que possible dans un plan perpendiculaire à l'axe respectif (1a, 2a) du corps.

3. Procédé suivant la revendication 1, caractérisé par le fait qu'on utilise quatre détecteurs (4a-4d) et que les faisceaux de mesure (L) sont respectivement émis par les corps individuels (1,2) ou les parties de corps autant que possible exactement sous le même angle par rapport à l'axe considéré (1a,2a) du corps.

4. Procédé suivant la revendication 1, caractérisé par le fait qu'on utilise quatre détecteurs (4a-4d) et que, dans le cas d'angles d'émission du faisceau de mesure qui sont différents d'un axe du corps à un autre, ces détecteurs sont disposés de telle sorte qu'ils sont situés approximativement à la même distance de l'axe de référence (1a).

5. Procédé suivant la revendication 1, caractérisé par le fait qu'on utilise cinq détecteurs (4a-4e).

6. Procédé suivant l'une des revendications précédentes, caractérisé par le fait que pour au moins un corps (1,2) ou une partie de corps, le faisceau de mesure (L) est orienté d'une manière fixe par rapport au corps et qu'on fait pivoter le corps ou la partie de corps.

7. Procédé suivant l'une des revendications 1 à 5, caractérisé par le fait qu'au moins un corps (1) ou une partie de corps est fixe lors du contrôle et que le faisceau de mesure associé L est pivoté autour d'un axe auxiliaire H d'un dispositif de raccordement (11a,11b,11c,11d) qui peut être monté sur le corps (1,2) ou la partie de corps et qui est réglé, par rapport à l'axe (1a) du corps, dans une position spatiale de référence connue, qui est la même pour chaque corps (1) ou partie de corps fixe.

8. Application du procédé suivant l'une des revendications précédentes au contrôle du parallélisme des axes de rotation d'arbres de cylindres disposés côte-à-côte.

9. Application du procédé suivant l'une des revendications 1 à 7, au contrôle du parallélisme de surface plane de corps disposée côte-à-côte, des axes perpendiculaires aux surfaces des corps étant utilisés comme axes des corps.

10. Dispositif pour contrôler l'alignement d'axes parallèles ou approximativement parallèles entre eux de corps (1,2) ou de parties de corps, disposés côte-à-côte, comme dans l'exemple des axes de corps, sur la base du degré de parallélisme exact ou de l'écart par rapport au parallélisme, caractérisé par
a) un émetteur de rayonnement de mesure (3) qui sert à émettre un faisceau de mesure focalisé sensiblement parallèle (L) d'un rayonnement électromagnétique notamment un faisceau laser, lequel émetteur de faisceau de mesure (3) peut être monté au moyen d'un dispositif de raccordement (10, 11a, 11b, 11c, 11d), fixé sur cet émetteur, sur le corps respectif (1) ou la partie de corps respective de telle sorte qu'il émet le faisceau de mesure (L) radialement ou approximativement radialement par rapport à l'axe à mesurer du corps ou bien par rapport à un axe, parallèle au précédent, du corps respectif (1) ou de la partie de corps respective, l'émetteur pouvant tourner autour de l'axe du corps ou d'un axe, parallèle au précédent, conjointement avec le corps (1) ou la partie du corps ou à l'opposé de ce corps ou de cette partie de corps,
b) au moins trois détecteurs optoélectroniques (4a-4d), qui peuvent être montés individuellement de façon fixe dans l'espace, possèdent chacun un axe (5) et délivrent des signaux électriques qui indiquent la position du point d'impact d'un faisceau de lumière sur l'axe (5) de ce détecteur, le long de cet axe, et
c) la disposition des détecteurs (4a-4e) écartée latéralement par rapport à la direction des axes à mesurer du corps, autour de cet axe, de telle sorte que les axes (5) des détecteurs sont, à une distance réciproque, parallèles ou approximativement parallèles à l'axe à mesurer du corps et, lors de sa rotation, sur une plage angulaire prédéterminée, le faisceau de mesure (L) recoupe les axes de mesure (5) de tous les détecteurs (4a-4e).

11. Dispositif suivant la revendication 10, caractérisé par le fait que le dispositif de raccordement (11a) peut être fixé rigidement au corps respectif (1) ou à la partie de corps respective.

12. Dispositif suivant la revendication 1, caractérisé par le fait que l'émetteur (3) du faisceau de mesure est relié rigidement au dispositif de raccordement.

13. Dispositif suivant la revendication 11, caractérisé par le fait que l'émetteur (3) du faisceau de mesure monté sur le dispositif de raccordement (11b, 11d, 11e) peut être entraîné en rotation par ce dispositif autour d'un axe H, qui, dans le cas où le dispositif de raccordement est fixé au corps (1) ou à la partie de corps, est approximativement parallèle à l'axe (1a) du corps ou coïncide avec cet axe.

14. Dispositif suivant la revendication 10, caractérisé par le fait que le dispositif de raccordement (11c) est monté de manière à pouvoir tourner autour de l'axe (1a) du corps, sur le corps respectif (1) ou la partie respective du corps et que l'émetteur (3) du faisceau de mesure est monté rigidement sur le dispositif de raccordement.

15. Dispositif suivant la revendication 14, caractérisé par le fait que le dispositif de raccordement (11c) possède une surface plane de montage (12a) permettant le montage sur une surface plane (12b) du corps, qui est perpendiculaire à l'axe de ce dernier, et que l'émetteur (3) du faisceau de mesure est fixée rigidement au dispositif de raccordement (11c), en étant orienté approximativement parallèlement à la surface de montage (12a).
